# FASCICULE DE BREVET EUROPEEN

(11) **EP 2 411 281 B1**
(45) Date de publication et mention de la délivrance du brevet: **04.09.2013**
(21) Numéro de dépôt: 10716581.3
(22) Date de dépôt: 26.03.2010
(51) Int. Cl.: B64D 29/00, B64D 33/02, F02C 7/04

(54) **NACELLE D'AERONEF COMPORTANT UNE PAROI EXTERIEURE RENFORCEE**
TRIEBWERKSEINLAUF MIT VERSTÄRKTER AUSSENWAND
ENGINE NACELLE WITH REINFORCED OUTER WALL

(30) Priorité: 27.03.2009 FR 0901473
(43) Date de publication de la demande: 01.02.2012
(73) Titulaire: Airbus Operations (S.A.S.), 31060 Toulouse (FR)
(72) Inventeur: CHELIN, Frédéric, F-32430 Encausse (FR); SURPLY, Thierry, F-31700 Cornebarrieu (FR)
(74) Mandataire: Fantin, Laurent
(86) Numéro de dépôt international: PCT/FR2010/050556
(87) Numéro de publication internationale: WO 2010/109152

(56) Documents cités:
- EP-A- 1 582 702
- GB-A- 635 082
- US-A- 3 542 152
- US-A1- 2003 031 556
- US-A1- 2006 219 475

## Description

La présente invention se rapporte à une nacelle d'aéronef comportant une paroi extérieure renforcée.

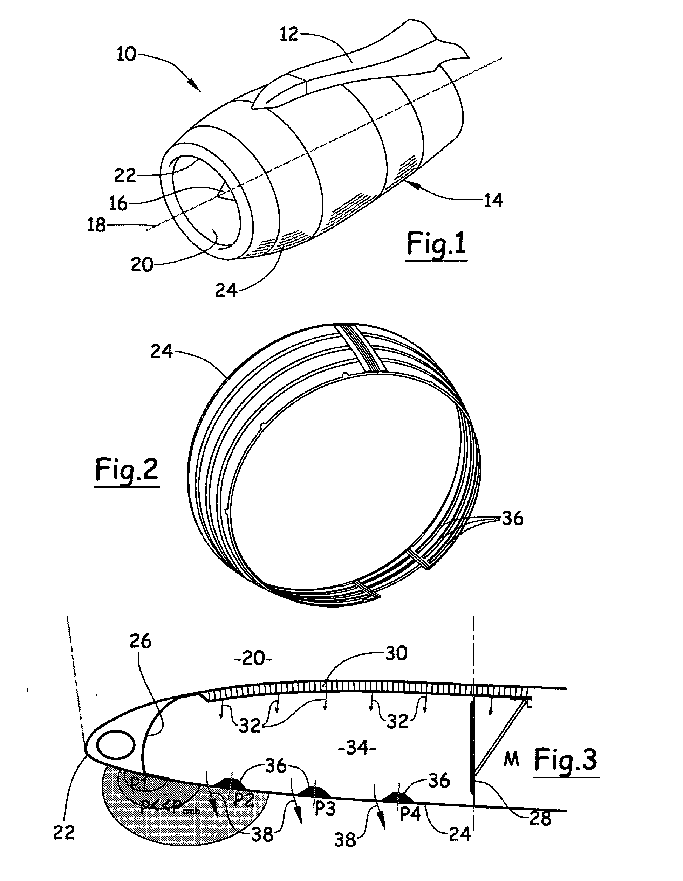

Sur la figure 1, on a représenté un ensemble propulsif 10 d'un aéronef relié sous la voilure par l'intermédiaire d'un mât 12.

Cet ensemble propulsif comprend une nacelle 14 dans laquelle est disposée de manière sensiblement concentrique une motorisation entraînant une soufflante montée sur son arbre 16. Pour la description, la direction longitudinale correspond à celle de l'axe de la nacelle référencé 18. Les plans perpendiculaires à la direction longitudinale sont appelés plans transversaux.

Comme illustré sur la figure 3, la nacelle 14 comprend une paroi délimitant un conduit intérieur 20 canalisant un flux d'air vers la motorisation, à l'avant une lèvre 22 (formant un bord d'attaque) et à l'extérieur une paroi extérieure 24 illustrée en détails sur la figure 2.

Un cadre avant 26 est prévu pour relier le conduit intérieur 20 et la paroi extérieure 24 et supporter la lèvre 22. En complément, un cadre arrière 28 est prévu pour relier le conduit intérieur 20 et la paroi extérieure 24 et assurer la liaison avec la motorisation M.

Pour réduire les nuisances sonores de l'ensemble propulsif, le conduit intérieur 20 comprend au moins un panneau pour le traitement acoustique 30 comportant de l'intérieur vers l'extérieur, une couche réflectrice, au moins une structure alvéolaire et au moins une couche acoustiquement résistive qui délimite le conduit intérieur 20 et canalise l'air en direction de la motorisation.

Ce panneau pour le traitement acoustique 30 peut être équipé d'un système de drainage permettant d'évacuer l'eau des cellules de la structure alvéolaire. A cet effet, les cellules de la structure alvéolaire peuvent comprendre des encoches permettant la circulation des liquides en direction de la partie inférieure du panneau 30. D'autres moyens peuvent être envisagés pour acheminer les liquides au niveau de la partie inférieure du panneau 30.

A proximité de la génératrice du panneau 30 disposée à 6 h, la couche réflectrice comprend une pluralité d'orifices permettant l'écoulement des liquides en dehors du panneau pour le traitement acoustique comme illustré par les flèches 32 sur la figure 3. Ainsi, les liquides drainés s'écoulent au niveau de la partie inférieure de la cavité 34 délimitée par le conduit intérieur 20, le cadre avant 26, la paroi extérieure 24 et le cadre arrière 28.

Comme illustré sur les figures 2 et 3, la paroi extérieure 24 comprend de nombreux raidisseurs circonférentiels 36 pour résister aux efforts générés par les écoulements aérodynamiques ou aux éventuels chocs.

Ces raidisseurs circonférentiels 36 se présentent sous forme de nervures en saillie vers l'intérieur de la cavité 34, comme visible sur les figures 2 et 3. Cette configuration est illustrée par le document EP-A-1 582 702. Chaque raidisseur 36 constitue une barrière empêchant l'écoulement des liquides vers la partie basse de la cavité à proximité du cadre arrière 28 si bien qu'il est nécessaire de prévoir une pluralité d'orifices d'évacuation 38 en amont de chaque raidisseur afin d'éviter l'accumulation de l'eau à ce niveau.

Ce mode de réalisation ne donne pas pleinement satisfaction pour les raisons suivantes :

Lors de certaines phases du vol, des phénomènes de dépression peuvent apparaître à l'extérieur de la nacelle et générer un gradient de pression P1<P2<P3<P4 au niveau de la surface où sont présents les orifices d'évacuation 38. La pression à l'intérieur de la cavité 34 étant sensiblement égale à la moyenne des pressions P1, P2, P3, P4, il existe donc un risque d'une circulation de l'extérieur vers l'intérieur de la cavité 34 au niveau des premiers orifices d'évacuation 38 se traduisant par des contraintes pour la structure. Pour répondre à ces contraintes, il est nécessaire de renforcer la paroi extérieure 24 ce qui se traduit par une augmentation de la masse embarquée et donc de la consommation énergétique.

Une solution peut consister à remplacer les orifices d'évacuation 38 situés dans la zone impactée par les phénomènes de dépression par une écope. Cependant, une écope tend à augmenter la traînée et donc la consommation énergétique de l'aéronef.

Aussi, la présente invention vise à pallier aux inconvénients de l'art antérieur en proposant une nacelle d'aéronef avec une paroi extérieure renforcée.

A cet effet, l'invention a pour objet une nacelle d'aéronef comprenant une paroi délimitant un conduit intérieur canalisant un flux d'air vers une motorisation, à l'avant une lèvre, à l'extérieur une paroi extérieure délimitant une cavité, ladite paroi extérieure comprenant au niveau de sa face intérieure au moins un raidisseur disposé dans un plan transversal, caractérisée en ce que ledit au moins un raidisseur comprend au moins un orifice de drainage autorisant l'écoulement des liquides à travers ledit raidisseur en direction d'un orifice d'évacuation éloigné de la lèvre de manière à limiter les risques d'aspiration de l'air à l'intérieur de ladite cavité.

D'autres caractéristiques et avantages ressortiront de la description qui va suivre de l'invention, description donnée à titre d'exemple uniquement, en regard des dessins annexés sur lesquels :
- la figure 1 est une vue en perspective d'une nacelle d'aéronef,
- la figure 2 est une vue en perspective d'une paroi extérieure selon l'art antérieur,
- la figure 3 est une coupe de la partie inférieure de l'avant d'une nacelle d'aéronef selon l'art antérieur,
- la figure 4 est une coupe de la partie inférieure de l'avant d'une nacelle d'aéronef selon l'invention, et
- les figures 5A à 5C sont des perspectives illustrant une portion d'un raidisseur d'une paroi extérieure selon différentes variantes de l'invention.

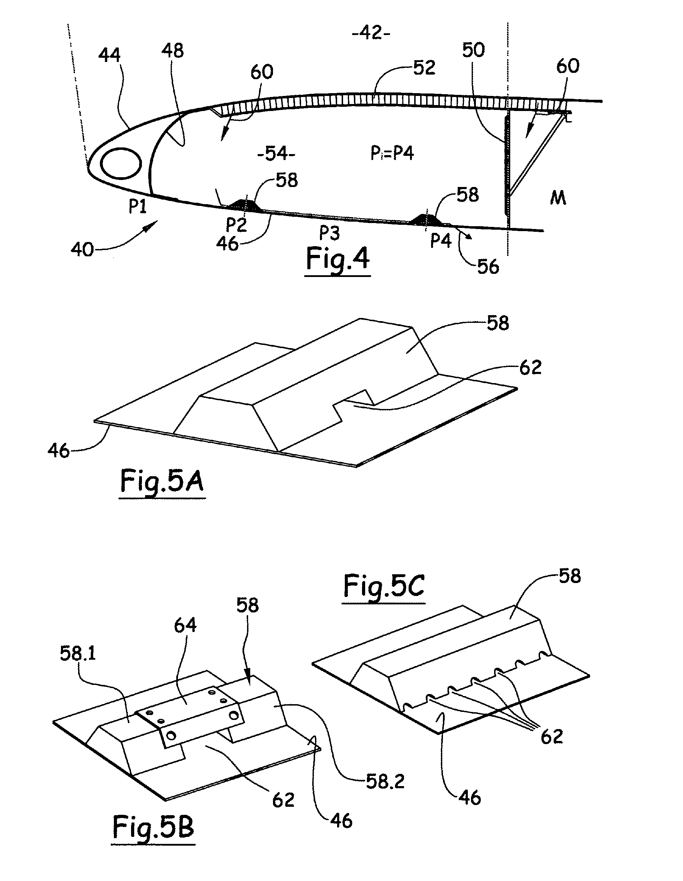

Sur la figure 4, on a représenté une coupe selon un plan longitudinal vertical (contenant l'axe 18) de la partie avant d'une nacelle 40. Ainsi, la figure 4 illustre la génératrice inférieure de la nacelle.

De manière connue, la nacelle 40 comprend une paroi délimitant un conduit intérieur 42 canalisant un flux d'air vers la motorisation, à l'avant une lèvre 44 (formant un bord d'attaque) et à l'extérieur une paroi extérieure 46.

Un cadre avant 48 est prévu pour relier la paroi délimitant le conduit intérieur 42 et la paroi extérieure 46 et supporter la lèvre 44. En complément, un cadre arrière 50 est prévu pour relier le conduit intérieur 42 et la paroi extérieure 46 et assurer la liaison avec la motorisation M.

Pour réduire les nuisances sonores de l'ensemble propulsif, le conduit intérieur 42 comprend de préférence au moins un panneau pour le traitement acoustique 52 comportant de l'intérieur vers l'extérieur, une couche réf lectrice, au moins une structure alvéolaire et au moins une couche acoustiquement résistive qui délimite le conduit intérieur 42 et canalise l'air en direction de la motorisation.

Ce panneau pour le traitement acoustique 52 peut être équipé d'un système de drainage permettant d'évacuer l'eau des cellules de la structure alvéolaire. A cet effet, les cellules de la structure alvéolaire peuvent comprendre des encoches permettant la circulation des liquides en direction de la partie inférieure du panneau 52. D'autres moyens peuvent être envisagés pour acheminer les liquides au niveau de la partie inférieure du panneau 52.

Au niveau de la génératrice du panneau 52 disposée à 6 h, la couche réflectrice comprend une pluralité d'orifices permettant l'écoulement des liquides en dehors du panneau pour le traitement acoustique. Ainsi, les liquides drainés s'écoulent au niveau de la partie inférieure de la cavité 54 délimitée par la paroi du conduit intérieur 42, le cadre avant 48, la paroi extérieure 46 et le cadre arrière 50.

La nacelle 40 comprend au moins un orifice d'évacuation 56 des liquides à l'extérieur de la nacelle par gravité prévu à proximité du cadre arrière 50 qui correspond au point le plus bas de la cavité 54.

La paroi extérieure 46 peut comprendre au niveau de sa face intérieure au moins un raidisseur 58. De préférence, ce raidisseur 58 est circonférentiel et disposé dans un plan transversal.

Selon un mode de réalisation, un raidisseur 58 a une section trapézoïdale, la grande base étant plaquée contre la face intérieure de la paroi extérieure 46. Cependant, l'invention n'est pas limitée à ce type de raidisseurs.

Selon l'invention, chaque raidisseur 58 comprend au moins un orifice de drainage 62 autorisant l'écoulement des liquides à travers ledit raidisseur par gravité en direction d'un orifice d'évacuation 56 disposé à proximité du cadre arrière 50, éloigné de la zone avant au niveau de laquelle peuvent apparaître des phénomènes de dépression lors de certaines phases du vol. Cet agencement permet d'éviter l'accumulation de liquides en amont des raidisseurs, ce qui permet de supprimer les orifices d'évacuation en amont des raidisseurs.

Le fait de ne prévoir qu'un seul orifice d'évacuation 56 éloigné de la lèvre permet de limiter les risques d'aspiration de l'air à l'intérieur de la cavité 54 en raison de phénomènes de dépression susceptibles d'apparaitre à l'avant de la paroi extérieure 46. Selon l'invention, la pression à l'intérieur de la cavité 54 est sensiblement égale à P4, la pression régnant à l'extérieur de la nacelle au droit de l'orifice d'évacuation 56 si bien qu'il n'existe pas de risque de circulation de l'extérieur vers l'intérieur de la nacelle au niveau d'une zone de dépression.

Les contraintes liées à ces phénomènes de dépression étant réduites, la paroi extérieure 46 est moins sollicitée si bien que le nombre de raidisseurs 58 peut être réduit ce qui tend à réduire la masse embarquée et donc la consommation énergétique.

Selon un autre avantage, le nombre d'orifices d'évacuation 56 (et donc de fuites) étant limité à un, il est possible éventuellement de générer une légère surpression dans la cavité 54 afin d'augmenter la résistance mécanique de la paroi extérieure 54.

Selon une première variante, chaque raidisseur 58 comprend au niveau de la zone inférieure de la nacelle un seul orifice de drainage 62 comme illustré sur les figures 5A et 5B. En variante, il est possible de prévoir pour chaque raidisseur 58 plusieurs orifices de drainage 62 avec des sections plus réduites, comme illustré sur la figure 5C.

Selon des variantes illustrées sur les figures 5A et 5C, le raidisseur 58 est continu et comprend au niveau de la face susceptible d'être en contact avec la face intérieure de la paroi extérieure 46 au moins une gorge disposée perpendiculairement par rapport audit raidisseur formant lorsque le raidisseur est plaqué contre la paroi extérieure 46 au moins un orifice de drainage 62. Selon d'autres variantes illustrées sur la figure 5B, le raidisseur 58 est discontinu et les parties du raidisseur 58.1 et 58.2 sont espacées de manière à permettre le passage des liquides. Un raccord 64 permet d'assurer la reprise des efforts en reliant par tous moyens appropriés les parties 58.1 et 58.2 du raidisseur, ledit raccord 64 étant décalé par rapport à la surface intérieure de la paroi extérieure 46 de manière à délimiter un orifice de drainage 62.

## Revendications

1. Nacelle d'aéronef comprenant une paroi délimitant un conduit intérieur (42) canalisant un flux d'air vers une motorisation, à l'avant une lèvre (44), à l'extérieur une paroi extérieure (46) délimitant une cavité (54), ladite paroi extérieure comprenant au niveau de sa face intérieure au moins un raidisseur (58) disposé dans un plan transversal, **caractérisée en ce que** ledit au moins un raidisseur (58) comprend au moins un orifice de drainage (62) autorisant l'écoulement des liquides à travers ledit raidisseur (58) en direction d'un orifice d'évacuation (56) éloigné de la lèvre de manière à limiter les risques d'aspiration de l'air à l'intérieur de ladite cavité (54).

2. Nacelle d'aéronef selon la revendication 1, **caractérisée en ce qu'**un raidisseur (58) comprend au niveau de la zone inférieure de la nacelle un seul orifice de drainage (62).

3. Nacelle d'aéronef selon la revendication 1, **caractérisée en ce qu'**un raidisseur (58) comprend au niveau de la zone inférieure de la nacelle plusieurs orifices de drainage (62) avec des sections réduites.

4. Nacelle d'aéronef selon l'une quelconque des revendications 1 à 3, **caractérisée en ce qu'**un raidisseur (58) est continu et comprend au niveau de la face susceptible d'être en contact avec la face intérieure de la paroi extérieure (46) au moins une gorge disposée perpendiculairement par rapport audit raidisseur formant lorsque le raidisseur est plaqué contre la paroi extérieure (46) au moins un orifice de drainage (62).

5. Nacelle d'aéronef selon l'une quelconque des revendications 1 à 3, **caractérisée en ce qu'**un raidisseur (58) est discontinu, les parties du raidisseur (58.1, 58.2) étant espacées de manière à permettre le passage des liquides et reliées par un raccord (64) décalé par rapport à la surface intérieure de la paroi extérieure (46) de manière à délimiter un orifice de drainage (62).

## Patentansprüche

1. Tiebwerksgondel eines Luftfahrszeuges mit einer Wand, die eine innere Zuführung (42) begrenzt, die einen Luftstrom zu einer Motorisierung führt, mit vorne einem Wulst (44) und außen einer Außenwand (46), die einen Hohlraum (54) begrenzt, wobei die Außenwand im Bereich der Innenseite wenigstens eine Versteifung (58) aufweist, die in einer quer verlaufenden Ebene angeordnet ist, **dadurch gekennzeichnet, dass** die wenigstens eine Versteifung (58) wenigstens eine Ablauföffnung (62) aufweist, die den Fluss von Flüssigkeiten quer zur Versteifung (58) in Richtung einer Abflussöffnung (56) ermöglicht, die von dem Wulst derart entfernt ist, dass die Gefahr eines Ansaugens von Luft in das Innere des Hohlraums (54) begrenzt ist.

2. Triebswerksgondel eines Luftfahrzeuges nach Anspruch 1, **dadurch gekennzeichnet, dass** eine Versteifung (58) im Innenbereich der Triebwerksgondel eine einzelne Ablauföffnung (62) aufweist.

3. Triebwerksgondel eines Luftfahrzeuges nach Anspruch 1, **dadurch gekennzeichnet, dass** eine Versteifung (58) im Innenbereich der Triebwerksgondel mehrere Ablauföffnungen (62) mit verringerten Querschnitten aufweist.

4. Triebwerksgondel eines Luftfahrzeuges nach einem der Ansprüche 1 bis 3, **dadurch gekennzeichnet, dass** eine Versteifung (58) unterbrechungsfrei ist und im Bereich einer zum Kontakt mit der Innenseite der Außenwand (46) vorgesehenen Seite wenigstens eine Durchführung aufweist, die bezüglich der Versteifungen im rechten Winkel angeordnet ist und die wenigstens eine Ablauföffnung (62) bildet, wenn die Versteifung an der Außenwand (46) angebracht ist.

5. Triebswerksgondel eines Luftfahrzeuges nach einem der Ansprüche 1 bis 3, **dadurch gekennzeichnet, dass** eine Versteifung (58) unterbrochen ist, wobei die Teile der Versteifung (58.1, 58.2) derart im Abstand angeordnet sind, dass der Durchlauf von Flüssigkeiten möglich ist, und wobei die Teile über eine Verbindung (64) verbunden sind, die im Abstand zur Innenseite der Außenwand (46) angeordnet ist, um die Ablauföffnung (62) zu begrenzen.

## Claims

1. Aircraft nacelle that comprises a wall that delimits an inside pipe (42) that channels a stream of air to a power plant, at the front a lip (44) and on the outside an outside wall (46) that delimits a cavity (54), whereby said outside wall comprises - at its inside surface - at least one stiffener (58) that is arranged in a transverse plane, **characterized in that** said at least one stiffener (58) comprises at least one drainage opening (62) that allows the flow of liquids through said stiffener (58) in the direction of a discharge opening (56) that is located away from the lip in such a way as to limit the risks of air being sucked inside said cavity (54).

2. Aircraft nacelle according to Claim 1, wherein at the lower zone of the nacelle, a stiffener (58) comprises a single drainage opening (62).

3. Aircraft nacelle according to Claim 1, wherein at the lower zone of the nacelle, a stiffener (58) comprises several drainage openings (62) with small cross-sections.

4. Aircraft nacelle according to any of Claims 1 to 3, wherein a stiffener (58) is continuous and comprises - at the surface that can be in contact with the lower surface of the outside wall (46) - at least one groove that is arranged perpendicularly relative to said stiffener that forms - when the stiffener is flattened against the outside wall (46) - at least one drainage opening (62).

5. Aircraft nacelle according to any of Claims 1 to 3, wherein a stiffener (58) is discontinuous, the parts of the stiffener (58.1, 58.2) being spaced in such a way as to allow liquids to pass and connected by a connection (64) that is offset relative to the inside surface of the outside wall (46) in such a way as to delimit a drainage opening (62).
